# EUROPEAN PATENT APPLICATION

(11) **EP 3 584 007 A1**
(43) Date of publication of application: **25.12.2019**
(21) Application number: 18178184.0
(22) Date of filing: 18.06.2018
(51) Int. Cl.: B01J 19/00, C08G 18/08

(54) **METHOD AND COMPUTER SYSTEM FOR DETERMINING PRODUCTION PARAMETERS FOR THE PRODUCTION OF A POLYMERIC PRODUCT**

(71) Applicant: Covestro Deutschland AG, 51373 Leverkusen (DE)
(72) Inventor: The designation of the inventor has not yet been filed
(74) Representative: Levpat

(57) **Abstract**

The invention relates to a method for determining production parameters (1) for the production of a polymeric product, wherein a prediction model (7) is provided for calculating production parameters (1) based on polymeric product properties (4) on a computer system, which production parameters (1) comprise formulation portions (2) specifying raw material portions for polymeric production and comprise processing parameters (3) specifying process properties during polymeric production, wherein user input is provided to the computer system, which user input comprises user product parameter targets (5) specifying polymeric product properties (4), wherein the computer system applies the user product parameter targets (5) to the prediction model to calculate resultant production parameters (11) for the production of a polymeric product associated with the user product parameter targets (5). The invention also relates to a corresponding computer system.

## Description

The invention is directed at a method for determining production parameters for the production of a polymeric product and at a computer system for determining production parameters for the production of a polymeric product.

There is a wide range of different applications for polymeric products. Here and thereinafter polymeric products are products substantially consisting of polymeric material, i.e. one or more polymers. Consequently, there are also wide-ranging and strongly varying different product property specifications that are prescribed for those polymeric products. These different specifications determine desired values or value ranges for weight, rigidity, emissions, temperature durability and many other features of the respective polymeric product. Further, the polymeric product properties do not only depend on the formulation, which specifies the material ingredients used for the polymeric product, but also on different process parameters applied in the production process of the polymeric product, including properties of production tools used.

The interdependencies between both the specific formulations and the process parameters used and the properties of the resulting polymeric product are very complex. Though there are some theoretical considerations that provide general formulas for some correlations between ingredients of the formulation or process parameters on the one hand and polymeric product properties on the other hand, these play a relatively minor role in determining a new formulation with corresponding process parameters in order to obtain a polymeric product according to a particular product specification. Instead, the usual process involves proceeding from a known formulation and known process parameters resulting in a product with known properties and then making adjustments based on prior experience and general considerations. Based on these adjustments, a number of sample products are produced and their relevant properties experimentally determined. Based on this approach, often a cycle of trial and error is repeated until the desired product properties are sufficiently reached or approximated. It is evident that this process is both costly in terms of production time and effort and also unreliable in that due to it being substantially unsystematic, the likelihood of approximating the desired specification within a given number of sample production runs is very hard to gauge. Proceeding from this prior art approach, it is therefore desirable to improve the process such that the knowledge from past formulations can be used such that a user is able to determine a suitable formulation with corresponding process parameters in order to obtain a product with pre-specified material and other product properties.

Consequently, the object of the invention is to provide a method and a computer system for determining production parameters for the production of a polymeric product, which method permits a more precise determination of the production parameters suitable for obtaining specific material properties with fewer additional experiments.

With respect to the method for determining production parameters for the production of a polymeric product, the object of the invention is achieved by a method for determining production parameters for the production of a polymeric product with the features of claim 1. With respect to the computer system for determining production parameters for the production of a polymeric product, the object of the invention is achieved by a computer system for determining production parameters for the production of a polymeric product with the features of claim 15.

The invention is based on the realization that cycles of trial and error can be reduced by utilizing a numerical prediction model which permits to arrive at an output of calculated production parameters based on formulation data and process parameters that are input. The invention is further based on the realization that it does not suffice to look at either formulation data or process parameters in isolation, but that both sets of variables need to be processed in an integrated way. Proceeding from a specification of desired product properties, the numerical prediction model may then provide both a suitable formulation and corresponding parameters for processing the material from the formulation for obtaining the desired product properties. Thus, cycles of trial and error may be omitted to a substantial degree. Consequently, development time and production costs are reduced.

The method according to the invention is for determining production parameters for the production of a polymeric product, wherein a prediction model is provided for calculating production parameters based on polymeric product properties on a computer system.

In other words, the prediction model is either a computer program or a parameter set for a computer program, which computer program is executed on a computer device and which takes at least the desired polymeric product properties as input and provides at least the production parameters as output. Any electronic device with a microprocessor presents a computer device in the present sense.

In principle, a polymeric product may be any product substantially consisting of one or more different polymer materials. Thus polymeric product properties may be the properties of any polymeric product and polymeric production may refer to the production of any polymeric product.

The polymeric product may be a polyurethane product or a polyisocyanurate product. Thus, the polymeric product properties may be polyurethane or polyisocyanurate product properties, the polymeric production may be polyurethane or polyisocyanurate production and the polymeric formulation may be polyurethane or polyisocyanurate formulation. Alternatively or in addition, the polymeric product may be a foam product. Thus alternatively or in addition, the polymeric product properties may be foam product properties, the polymeric production may be foam production and the polymeric formulation may be foam formulation.

Preferably, the polymeric product is a polycarbonate product. Accordingly, the polymeric product properties may be polycarbonate product properties, the polymeric production may be polycarbonate production and the polymeric formulation may be polycarbonate formulation.

In the method according to the invention, the production parameters comprise formulation portions specifying raw material portions for polymeric production. In other words, the formulation portions specify what raw material is used and to what proportion for producing the polymeric product. This also relates to material such as blowing agents which may be used in the production of the polymeric product but substantially are not part of the polymeric product. The production parameters may further comprise calculated/simulated data taken from formulation portions and properties of the chemical components such as density and/or hydroxyl value.

In the method according to the invention, the production parameters also comprise processing parameters specifying process properties during polymeric production. Preferably, the processing parameters comprise machine processing parameters specifying machine process properties during polymeric production. In the present sense, a machine may be any kind of apparatus and in particular a lab apparatus for any or all steps of polymeric production. The machine processing parameters may comprise settings for the machine or group of machines that processes the raw material in order to obtain the polymeric product. The machine processing parameters may also comprise constant characteristics of the machine or group of machines. These may include geometrical dimensions, maximum power etc of the machine or group of machines.

It is preferred that the processing parameters comprise ambient processing parameters specifying ambient properties during polymeric production. Such ambient properties may describe any sensor result taken from the ambient environment such as temperature, pressure or moisture.

Further in the method according to the invention, user input is provided to the computer system, which user input comprises user product parameter targets specifying user product parameter product properties.

In other words, the user input provides the above-mentioned input parameters in the form of desired properties of the polymeric product for the prediction model. The user product parameter targets may also refer to value brackets instead of specific individual values. The user product parameter targets may also be indirectly given, e.g. by reference to known polymeric product properties of a known polymeric product.

According to the method of the invention, the computer system applies the user product parameter targets to the prediction model to calculate resultant production parameters for the production of a polymeric product associated with the user product parameter targets. The polymeric product associated with the user product parameter targets may also be denoted as polymeric product for realizing the user product parameter targets. This means that resultant foam production parameters are such that the user product parameter targets are to be at least approximated by a polymeric product produced according to the production parameters. The degree to which those polymeric product properties are actually realized by such a polymeric product may be different for different cases. It is to be noted that actual application of the resultant production parameters to produce a polymer product may or may not take place.

Applying the user product parameter targets to the prediction model may also comprise the prediction model determining and in particular calculating derived or intermediate values based on the polymeric product properties. These derived or intermediate values may then be used to calculate the resultant production parameters in the same way as the polymeric product properties of the user product parameter targets are used. In other words, auxiliary values may be calculated and relied upon when applying the user product parameter targets to the prediction model.

In addition, the production parameters may also comprise formulation description data for describing dynamic behavior of the raw material portions. For example, if the polymeric production is a foam production and the foam is created by the reaction of the raw materials according to the raw material portions, then the formulation description data may describe properties relating to that reaction. Thus, the formulation description data may specify starting time, rising time and/or setting time. Also, in case of a polyurea or polyurethane foam product the formulation description data may specify urea- or urethane portions and/or urea- and urethane knot density.

The polymeric product properties may in principle relate to any physical or chemical property of the polymer product resulting from the production parameters. In particular, the polymeric product properties may comprise density, compression characteristics, restoring characteristics, compression hardness, thermal conductivity, compressive strength, torsional stiffness and/or flame resistance.

In principle, for the method according to the invention the resultant production parameters may or may not be used in any arbitrary way. Yet according to a preferred embodiment of the method, the production parameters comprise machine processing parameters specifying machine process properties during production. Here it is further preferred that the machine process properties of the resultant production parameters are applied to provide raw materials according to the formulation portions to a machine for polymeric production such that a polymeric product is produced by the machine from the raw materials. It is preferred that the machine process properties comprise user-settable machine process settings and that the resultant production parameters are applied to select machine process settings in the machine for polymeric production, such that a polymeric product is produced by the machine from the raw materials. Thus, in this preferred embodiment the method culminates in the production of an actual polymeric product.

It may be that the prediction model calculates just the resultant production parameters. However, according to a further preferred embodiment of the method, the prediction model determines a resultant confidence value for the resultant production parameters, which confidence value describes an accuracy with respect to the user product parameter targets of the polymeric product, when the user product parameter targets are applied to the prediction model. This confidence value is not a fixed and precise measure of the actual difference between the user product parameter targets and the actual polymeric product properties of a polymeric product produced according to the resultant production parameters. Instead, it is measure of how reliable the resultant production parameters appear based on the quality of the prediction model for those resultant production parameters. Thus the confidence value may also be described as a projected accuracy with respect to the user product parameter targets.

It may be that the prediction model calculates only a single instance of production parameters, i.e. production parameters for the production of a single polymeric product. In a preferred embodiment of the method, the prediction model calculates a plurality of resultant production parameters for the production of a plurality of polymeric products associated with the user product parameter targets when the user product parameter targets are applied to the prediction model. This is advantageous when there are several candidate production parameters, which may be the case also depending on the quality of the prediction model with respect to the particular user product parameter targets. In this case either a plurality of the resultant production parameters may be used for an in particular experimental production or the choice of a preferred instance of resultant production parameters may be based on the considerations of an expert, e.g. the user of the computer system. It may be that the prediction model itself may contain information relating to the relative accuracy of each instance of the resultant production parameters. Here it is further preferred that the prediction model determines a resultant confidence value for each of the resultant production parameters when the user product parameter targets are applied to the prediction model.

In a further preferred embodiment of the method, the user input comprises a user confidence limit for specifying a minimum confidence value for the resultant production parameters and that the resultant confidence value for each of the resultant production parameters is at least equal to the user confidence limit. In this way, the user can at least indirectly influence or determine how may candidate production parameters the user wants to obtain from the prediction model. In particular in circumstances when even lab production is expensive, production parameters with less projected accuracy may be ruled out a priori.

It may be that the user imposes no restriction on the raw materials that may be considered for achieving the user product parameter targets. However, according to a preferred embodiment of the method, the user input comprises a user selection of raw materials from a list of raw materials predefined in the computer system, thereby defining combinations of the raw materials for a polymeric formulation, and that the formulation portions specify raw material portions from the user selection of raw materials. Thus, a user may restrict those raw materials which are to be generated by the prediction model for achieving the user product parameter targets. This may be useful when the use of some raw materials is not possible or expeditious for economical, logistical or other reasons or the use of some other raw materials is especially preferred.

In principle, any raw material used for polymeric production may be specified by the formulation portions, even if it is not present in the finished polymeric product. According to a further preferred embodiment of the method, the user-selected raw materials comprise an isocyanate and a polyol. The user-selected raw materials may also comprise a plurality of isocyanates and/or a plurality of polyols. The user-selected raw materials may also comprise a blowing agent. Preferably, the user-selected raw materials further comprise a chain extender, a cross linker, a catalyst for accelerating the formation of polyurethane, a flame retardant, a pigment and/or a surfactant. Further, the user-selected raw materials may comprise fillers of any kind.

The user product parameter targets can be provided not only by having one particular set value for each polymeric product property, but also providing a plurality of set values or a value range for each polymeric product property. In this context, a preferred embodiment of the method is characterized in that the user product parameter targets comprise at least one product parameter bracket for a respective polymeric product property, which product parameter bracket defines a subrange within a maximum portion range predefined in the computer system for that polymeric product property, and that the computer system applies the user product parameter targets to the prediction model such that for a plurality of product parameter values within each product parameter bracket resultant production parameters are calculated. Thus, when such a product parameter bracket is provided, also a plurality of resultant production parameters corresponding to a plurality of product parameter values in the product parameter bracket is calculated

Preferably, the user product parameter targets comprise a plurality of product parameter brackets for respective polymeric product properties. When such a respective product parameter bracket is provided for a plurality of polymeric product properties, then accordingly the plurality of resultant production parameters may correspond to a set of combinations of the product parameter values from the plurality of product parameter brackets.

There may also be several product parameter brackets for one and the same polymeric product property. Accordingly, it is preferred that the user product parameter targets comprise at least for one polymeric product property a plurality of non-overlapping product parameter brackets.

In principle, the plurality of product parameter values within the product parameter bracket may be determined in an arbitrary manner. One possibility is to sweep the product parameter bracket with a given resolution or granularity. Thus, according to a preferred embodiment of the method, the user product parameter targets comprise a product parameter resolution for each product parameter bracket, which product parameter resolution defines a step value for varying a product parameter value within the respective product parameter bracket and the computer system applies the user product parameter targets to the prediction model such that the plurality of product parameter values within each product parameter bracket is determined by varying the product parameter values according to the step value. Such a product parameter resolution may also differ from product parameter bracket to product parameter bracket. Preferably, the respective product parameter resolution of two product parameter brackets for the same polymeric product property is different.

The machine process properties may in principle relate to any setting applied to a device, machine or plant involved in the production of a polymeric product or any constant characteristic describing such a device, machine or plant. In particular, the user-settable machine process settings may comprise machine process settings for variably adjusting the operation of a machine in the production of a polymeric product. According to a further preferred embodiment of the method, the machine process properties, preferably the user-settable machine process settings, comprise a component temperature, a mixing time, a mixing proportion, a tool temperature, a discharge capacity and/or a line speed. All the described machine process properties are in particular for polymeric production.

It may be that the user product parameter targets specify all polymeric product properties that can be specified according to the prediction model. It may also be that, the user product parameter targets relate only to a subset of specifiable product properties. Therefore, according to a further preferred embodiment of the method, the user product parameter targets consist of a user-selected strict subset of a set of selectable polymeric product properties. Also, not every polymeric product property specified by a user product parameter target has to be assigned the same importance. Preferably, the user input comprises a set of user weighting factors, with each weighting factor associated with a user-selected polymeric product property and describing a relative importance for realizing the corresponding user product parameter target. Thus, each user product parameter target may be processed with a different importance by the prediction model based on that weighting factor.

In principle, the prediction model can be arrived at in any manner and generated based on any considerations. However, it is particularly helpful when the prediction model can be based on a preferably large amount of historic formulation data. Thus, a preferred embodiment of the method is characterized in that on the computer system a formulation database is provided comprising test entries for a respective polymeric product, wherein each test entry comprises polymeric product properties data associated with that polymeric product and comprises formulation portions data specifying raw material portions used for the production of that polymeric product and comprises processing parameters data specifying process properties during the production of that polymeric product.

The formulation database may either be a single database or may be a system of several databases, with different kinds of information stored in each of the several databases.

The polymeric product properties data may comprise measurement data measured from the polymeric product or a plurality of such products. In other words the measurement data may have been obtained by a test of the solidified plastic foam product according to the test entry. A database of historic lab and large-scale production runs of solidified plastic foam products may provide such data.

Further, the polymeric product properties data may comprise measurement circumstance data describing the measurement process applied for obtaining the measurement data. This measurement circumstance data may describe measurement apparatus properties, in particular measurement apparatus settings, applied when obtaining the measurement data. The measurement circumstance data may also comprise ambient properties, which may include temperature and pressure, when obtaining the measurement data.

Further, the measurement data may also comprise usage properties of the polymeric product from which the measurement data was obtained, which usage properties describe the usage of that polymeric product prior to obtaining of the measurement data. For example, these usage properties may comprise a storage duration of the polymeric product from which the measurement data was obtained and ambient properties during storage of the polymeric product from which the measurement data was obtained. The usage properties may also comprise mechanical stress and/or chemical exposure, preferably along with time information on that mechanical stress and/or chemical exposure. The usage properties may further comprise a respective distribution of mechanical stress and/or chemical exposure which is variable during a given time span.

However, missing values in the polymeric properties data may occur. Preferably, the polymeric properties data comprises reconstructed data. The reconstructed data therefore serves to fill such missing values. Such reconstructed data may be data calculated by applying analytical formulas. Such reconstructed data may also be determined based on interpolation or extrapolation, on statistical analysis and/or on expert knowledge. Ways to fill missing values could be using statistical analyses and/or expert knowledge. Statistical analyses may provide median, average value, expectation values, minimum or maximum values based on the given values for each parameter. Expert knowledge comprises knowledge of similar formulations with corresponding production parameters and of chemical properties.

The advantage of using historical and measured data is that a prediction model based on them does not need to rely on theoretical assumptions which may turn out to be inaccurate. Preferably, the prediction model is generated by executing a numerical analysis program on the formulation database. In principle, any kind of numerical analysis may be used to generate the prediction model. Advantageously, the numerical analysis program preferably comprises a multivariate analysis, machine learning, deep learning and/or artificial intelligence.

The manner in which the prediction model calculates the production parameters based on the polymeric product properties may generally be of any kind. According to a preferred embodiment of the invention, the prediction model defines a multi-variable functional relationship with the polymeric product properties as input parameters and the production parameters as output parameters. Here it is further preferred that when the computer system generates the prediction model, the dependency between the input parameters and the output parameters is based on a fitting algorithm to match the prediction model to the test entries of the formulation database. For this fitting, any kind of fitting algorithm may be used. It is to be noted that the prediction model need not in fact be optimal in any sense with respect to the test entries of the formulation database.

In a further preferred embodiment, the prediction model is, in particular automatically, regenerated when a change in the formulation database occurs, in particular when a new test entry is added to the formulation database and/or when new data is added to an existing test entry of the formulation database. Therefore, any ongoing new measurement continually adds to the quality of the prediction model.

One advantage of analyzing both the formulation portions and the processing parameters of the formulation database in a combined and therefore unified way is that specific relationships between one or more parameters among the formulation portions on the one hand and the processing parameters on the other hand may be determined. Such relationships may remain undiscovered if these are analyzed only separately. Consequently, according to a further preferred embodiment of the invention, when the computer system generates the prediction model, the computer system executes a dimension reduction which involves both a formulation portion dimension and processing parameter dimension. Preferably, the execution of the dimension reduction comprises a principal component analysis in order to determine a set of principal components with fewer principal components than the foam production parameters and that at least one determined principal component comprises both a formulation portion dimension and a processing parameter dimension.

In general, when generating the prediction model based on numerical analysis of the data from the formulation database, the prediction model usually becomes more accurate the more data is used for the prediction model. However, it may be that only a certain parameter region of a user product parameter target is of relevance for the specified target product properties. In such situations, the prediction model for that parameter region of the user product parameter target may be more accurate when the data basis for the prediction model is restricted to within a proximity bracket for the relevant user product parameter target. In this way, outliers outside the proximity bracket are prevented from influencing the prediction model in the relevant range. Therefore, a preferred embodiment of the method is characterized in that the user input comprises at least one properties proximity bracket for a respective user product parameter target, which properties proximity bracket defines a subrange within a maximum properties range predefined in the computer system for that user product parameter target and that, when the computer system generates the prediction model, for determining a functional relationship with that polymeric product property as input parameter, only test entries with that polymeric product property within the proximity bracket are considered.

The computer system according to the invention is for determining production parameters for the production of a polymeric product. The computer system according to the invention comprises a computer arrangement and a prediction model for calculating production parameters based on polymeric product properties stored on the computer arrangement, which production parameters comprise formulation portions specifying raw material portions for polymeric production and comprise processing parameters specifying machine process settings during polymeric production. In the computer system according to the invention, the computer arrangement is configured to receive user input comprising user product parameter targets specifying polymeric product properties and further configured to apply the user product parameter targets to the prediction model to calculate resultant production parameters for the production of a polymeric product associated with the user product parameter targets.

The computer arrangement may comprise one or more computer devices which are linked by an arbitrary network, e.g. the internet, and may therefore be a distributed computer arrangement.

Preferred embodiments, features and advantages of the computer system according to the invention correspond to those of the method according to the invention and vice versa.

Further advantageous and preferred features are discussed in the following description with respect to the Figures. In the following it is shown in
- Fig. 1: an illustration of the functioning principle of an embodiment of the method according to the invention and in
- Fig. 2: a computer system according to an embodiment of the invention.

The method according to the invention is used to determine production parameters 1 for the production of a polymeric product which in the present example is polyurethane. More generally, a user of the method according to the invention is seeking to identify a recipe for producing a polymeric product, which is here a polyurethane product. The desired recipe is put in terms of the production parameters 1, which are defined here in terms firstly of formulation portions 2, which describe the respective proportion of raw material used in the production of the polyurethane product. The formulation portions 2 thus comprised by the production parameters 1 are illustrated in a simplified way along one axis only, which is here the x-axis, even though the formulation portions 2 are multi-dimensional.

This recipe is described secondly in terms of processing parameters 3 also comprised by the production parameters 1, which processing parameters determine the properties of a machine, including the settings of the machine either of a smaller scale in a lab or of larger scale in a factory, used to produce a polyurethane product from the ingredients according to the formulation portions 2. Like the formulation portions 2, also the processing parameters 3 are illustrated in a simplified way along one axis only, which is here the y-axis, even though also the processing parameters 3 are multi-dimensional.

The formulation portions 2 and the processing parameters 3 together form the production parameters 1 defining such a recipe, though it is possible that the production parameters 1 comprise additional information.

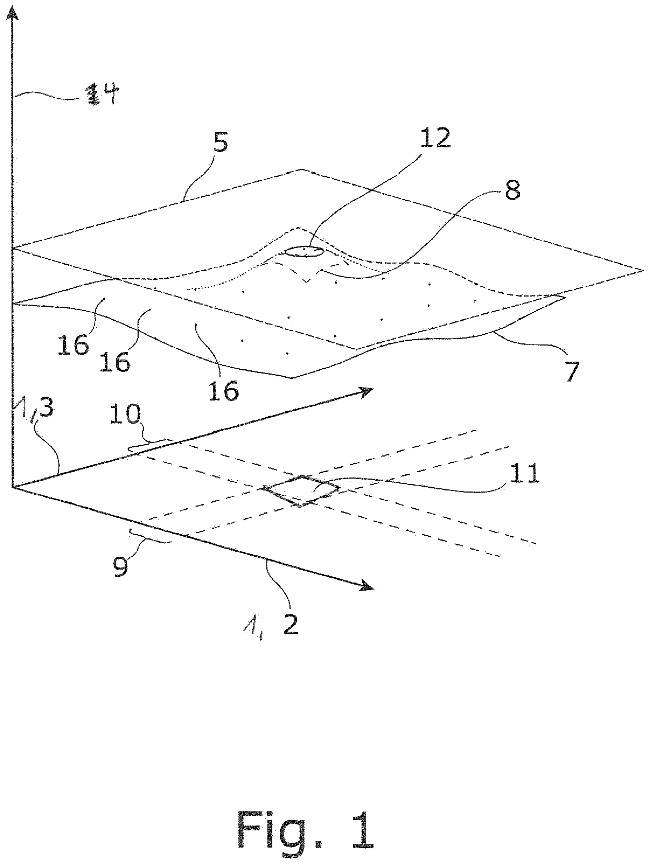

The user strives to identify particular production parameters 1 such that the resultant polyurethane product exhibits physical characteristics in accordance with user product parameter targets 5 that describe polymeric product properties 4 which are here solidified plastic foam product properties. Such polymeric product properties 4 comprise here a wide range of physical or chemical properties of a polyurethane product, such as density, compressive strength, dimensional stability, thermal resistance, fire performance and emissions. In Fig. 1, the totality of these polymeric product properties 4 is illustrated in a simplified way along one axis - the z-axis - only for the sake of clarity, as was done for the formulation portions 2 and the processing parameters 3. In reality, the polymeric product properties 4 correspond to an array of values and are therefore multi-dimensional.

The user product parameter targets 5 may arise from a specific customer request or may be determined such that the polyurethane product can be used in a specific component or in some specific way for a larger arrangement.

Like the polymeric product properties 4 that they describe, the user product parameter targets 5 are here illustrated as a single value along the one-dimensional axis corresponding to the polymeric product properties 4, even though in practice they extend in several directions. Moreover and also in deviation from the illustration of Fig. 1 the user product parameter targets 5 do not specify just a single desired value of polymeric product properties 4, but rather a value bracket. In other words, any value within that value bracket is deemed within the specification according to the user product parameter targets 5.

Associated with the user product parameter targets 5 and comprised by the user input is a confidence limit. It describes a lower limit for the confidence value, i.e. of the minimum projected likelihood that the user product parameter targets 5 are met by the polymeric product properties 4 of a polymeric product produced according to the production parameters 1 determined by the proposed method. The confidence limit as well as any confidence value associated by any set of foam production parameters 1 may be expressed as a number.

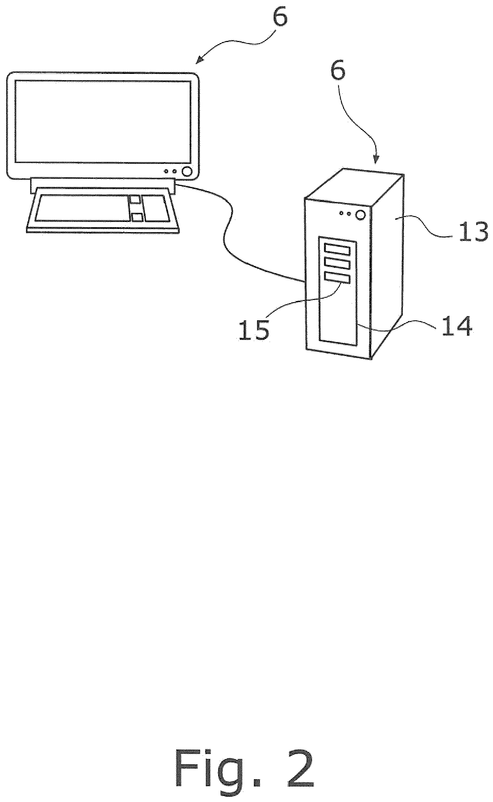

The user now provides user input to the computer arrangement 6, shown in Fig. 2, of a computer system. That user input comprises the above user product parameter targets 5 specifying particular desired values of solidified plastic foam product properties 4 and the above confidence limit.

The computer device 6 of the computer system utilizes a prediction model 7 stored on the computer device 6 in order to calculate foam production parameters 1 based on the polymeric product properties 4 of the user product parameter targets 5. This prediction model 7 is shown in Fig. 1 in a simplified manner as a function with a one-dimensional input, corresponding to the polymeric product properties 4, and a two-dimensional input consisting of the formulation portions 2 and the processing parameters 3. In reality, both the input and the output of the prediction model 7 can be multi-dimensional.

For the user production parameter targets 5, the computer device 6 of the computer system now calculates the resultant production parameters 8 based on the prediction model 7 and in particular by applying the user product parameter targets 5 to the prediction model 7. In other words, the user product parameter targets 5 forms the input for the function defined by the prediction model 7 and the resultant production parameters 11 form the corresponding output.

In the present case and as shown in Fig. 1, there is a region 12 in which the user product parameter targets 5 match predicted polymer product properties 4. Based on the above-mentioned confidence limit, which in the present case requires only a relatively modest likelihood of match, the computer arrangement 6 identifies the region 12 as well as a neighborhood 8 of the region 12 in which a match with the user product parameter targets 5 is also likely.

The plurality of production parameters 11 which correspond to the region 12 and the neighborhood 8 are output by the computer arrangement 6. As can be seen, the output plurality of production parameters 11 present candidate value brackets both for the formulation portions 2, i.e. resultant formulation portions 9, as well as for the processing parameters, i.e. resultant processing parameters 10.

The computer device 6 comprises a memory unit 13 in which a formulation database 14 is stored with a plurality of test entries 15 for polyurethane formulations, which has been compiled from historic data concerning the production and testing of polyurethane products. The prediction model 7 has been generated by the computer device 6 performing a multivariate analysis, including a dimension reduction method, e.g. principal component analysis, and a fitting step, on the data of the formulation database 14. In Fig. 1, test polyurethane product properties data 16 for some exemplary test entries 15 of the formulation database 14 are shown. As can be seen, the prediction model 7 substantially corresponds to a best fit approximation for the test polyurethane product properties data 16 of the exemplary test entries 1

## Claims

1. Method for determining production parameters (1) for the production of a polymeric product, wherein a prediction model (7) is provided for calculating production parameters (1) based on polymeric product properties (4) on a computer system, which production parameters (1) comprise formulation portions (2) specifying raw material portions for polymeric production and comprise processing parameters (3) specifying process properties during polymeric production, wherein user input is provided to the computer system, which user input comprises user product parameter targets (5) specifying polymeric product properties (4), wherein the computer system applies the user product parameter targets (5) to the prediction model to calculate resultant production parameters (11) for the production of a polymeric product associated with the user product parameter targets (5).

2. Method according to claim 1, **characterized in that** the production parameters comprise machine processing parameters specifying machine process properties during production, preferably, that the machine process properties of the resultant production parameters (11) are applied to provide raw materials according to the formulation portions (2) to a machine for polymeric production, preferably, that the machine process properties comprise user-settable machine process settings and that the resultant production parameters (1) are applied to select machine process settings in a machine for polymeric production, such that a polymeric product is produced by the machine from the raw materials.

3. Method according to claim 1 or 2, **characterized in that** the prediction model (7) determines a resultant confidence value for the resultant production parameters (11), which confidence value describes an accuracy with respect to the user product parameter targets (5) of the polymeric product, when the user product parameter targets (5) are applied to the prediction model (7).

4. Method according to one of claims 1 to 3, **characterized in that** the prediction model (7) calculates a plurality of resultant production parameters (11) for the production of a plurality of polymeric products associated with the user product parameter targets (5) when the user product parameter targets (5) are applied to the prediction model (7), preferably, that the prediction model (7) determines a resultant confidence value for each of the resultant production parameters (11) when the user product parameter targets (5) are applied to the prediction model (7).

5. Method according to claim 4, **characterized in that** the user input comprises a user confidence limit for specifying a minimum confidence value for the resultant production parameters (11) and that the resultant confidence value for each of the resultant production parameters (11) is at least equal to the user confidence limit.

6. Method according to one of claims 1 to 5, **characterized in that** the user input comprises a user selection of raw materials from a list of raw materials predefined in the computer system, thereby defining combinations of the raw materials for a polymeric formulation, and that the formulation portions (2) specify raw material portions from the user selection of raw materials.

7. Method according to claim 6, **characterized in that** the user selection of raw materials comprises an isocyanate and a polyol, in particular also a blowing agent, preferably, further comprises a chain extender, a cross linker, a catalyst for accelerating the formation of polyurethane, a flame retardant, a pigment and/or a surfactant.

8. Method according to one of claims 1 to 7, **characterized in that** the user product parameter targets (5) comprise at least one product parameter bracket for a respective polymeric product property (4), which product parameter bracket defines a subrange within a maximum portion range predefined in the computer system for that polymeric product property (4), and that the computer system applies the user product parameter targets (5) to the prediction model (7) such that for a plurality of product parameter values within each product parameter bracket resultant production parameters (11) are calculated, preferably, that the user product parameter targets (5) comprise at least for one polymeric product property (4) a plurality of non-overlapping product parameter brackets.

9. Method according to claim 8, **characterized in that** the user product parameter targets (5) comprise a product parameter resolution for each product parameter bracket, which product parameter resolution defines a step value for varying a product parameter value within the respective product parameter bracket and that the computer system applies the user product parameter targets (5) to the prediction model (7) such that the plurality of product parameter values within each product parameter bracket is determined by varying the product parameter values according to the step value, preferably, that the respective product parameter resolution of two product parameter brackets for the same polymeric product property (4) is different.

10. Method according to one of claims 1 to 9, **characterized in that** the process properties, preferably the machine process properties, in particular the user-settable machine process settings, comprise a component temperature, a mixing time, a mixing proportion, a tool temperature, a discharge capacity and/or a line speed.

11. Method according to one of claims 1 to 10, **characterized in that** the user product parameter targets (5) consist of a user-selected strict subset of a set of selectable polymeric product properties (4), preferably, that the user input comprises a set of user weighting factors, with each weighting factor associated with a user-selected polymeric product property (4) and describing a relative importance for realizing the corresponding user product parameter target (5).

12. Method according to one of claims 1 to 11, **characterized in that**, on the computer system a formulation database (14) is provided comprising test entries (15) for a respective polymeric product, wherein each test entry (15) comprises polymeric product properties data associated with that polymeric product and comprises formulation portions data specifying raw material portions used for the production of that polymeric product and comprises processing parameters data specifying process properties during the production of that polymeric product, preferably, that the prediction model (7) is generated by executing a numerical analysis program, further preferably comprising machine learning, on the formulation database (14).

13. Method according to claim 10, **characterized in that** the prediction model (7) defines a multi-variable functional relationship with the polymeric product properties (4) as input parameters and the production parameters (1) as output parameters, preferably, that when the computer system generates the prediction model (7), the dependency between the input parameters and the output parameters is based on an fitting algorithm to match the prediction model (7) to the test entries (15) of the formulation database (14).

14. Method according to claim 11, **characterized in that** when the computer system generates the prediction model (7), the computer system executes a dimension reduction which involves both a formulation portion dimension and processing parameter dimension, preferably, that the dimension reduction comprises a principal component analysis in order to determine a set of principal components with fewer principal components than the foam production parameters and that at least one determined principal component comprises both a formulation portion dimension and a processing parameter dimension.

15. Computer system for determining production parameters (1) for the production of a polymeric product, the computer system comprising a computer arrangement (6) and a prediction model (7) for calculating production parameters (1) based on polymeric product properties (4) stored on the computer arrangement (6), which production parameters (1) comprise formulation portions (2) specifying raw material portions for polymeric production and comprise processing parameters (3) specifying process properties during polymeric production, wherein the computer arrangement (6) is configured to receive user input comprising user product parameter targets (5) specifying polymeric product properties (4) and further configured to apply the user product parameter targets (5) to the prediction model (7) to calculate resultant production parameters (11) for the production of a polymeric product associated with the user product parameter targets (5).
